# EUROPÄISCHE PATENTSCHRIFT

(11) **EP 1 072 566 B1**
(45) Veröffentlichungstag und Bekanntmachung des Hinweises auf die Patenterteilung: **26.11.2003**
(21) Anmeldenummer: 00113681.1
(22) Anmeldetag: 28.06.2000
(51) Int. Cl.: C04B 22/10, C04B 28/04, C04B 40/00

(54) **Schnellerhärtende, hydraulische Bindemittelmischung und Verfahren zu ihrer Herstellung**
Rapid hardening hydraulic binder mixture and process for its preparation
Mélange de liant hydraulique à durcissement rapide et procédé pour sa préparation

(30) Priorität: 30.07.1999 DE 19936093
(43) Veröffentlichungstag der Anmeldung: 31.01.2001
(73) Patentinhaber: DYCKERHOFF AKTIENGESELLSCHAFT, D-65203 Wiesbaden (DE)
(72) Erfinder: Mitkova, Darina, Dr., 55276 Oppenheim (DE); Möller, Wolfgang, 65510 Idstein (DE)
(74) Vertreter: Patentanwälte Dr. Solf & Zapf

(56) Entgegenhaltungen:
- EP-A- 1 004 555
- EP-A- 1 004 556
- DE-A- 3 833 932
- FR-A- 2 390 395
- US-A- 4 066 469
- CHEMICAL ABSTRACTS, vol. 92, no. 14, 7. April 1980 (1980-04-07) Columbus, Ohio, US; abstract no. 115394y, WESTVACO CORP.: Seite 286; XP000183989 & IL 49 544 A (ID.) 25. Juli 1979 (1979-07-25)
- CHEMICAL ABSTRACTS, vol. 115, no. 16, 21. Oktober 1991 (1991-10-21) Columbus, Ohio, US; abstract no. 165247s, F. SKVARA, ET AL.: Seite 388; XP000318270 & CS 269 193 A (ID.)

## Beschreibung

Die Erfindung betrifft eine schnellerhärtende, hydraulische Bindemittelmischung nach dem Oberbegriff des Anspruch 1 und ein verfahren zur Herstellung nach dem Oberbegriff des Anspruch 14.

Hydraulische Bindemittelsysteme aus sulfatträgerfreiem Portlandzementklinkermehlen mit Verflüssigern zur Erstarrungsregelung sind bekannt. Bei derartigen Bindemittelsystemen stehen die extrem hohe Festigkeit zu sehr frühen Zeitpunkten, insbesondere schon ab 2 Stunden im Vordergrund. Diese Frühfestigkeiten sind für die Formulierung von Spezialmörteln und -betonen für Reparaturzwecke sehr vorteilhaft.

Aus "Baustoffindustrie 1990", Seiten 104 bis 107 ist es bekannt, bei derartigen Bindemittelsystemen mit einer Kombination von Ligninsulfonaten und Alkalicarbonaten ein gipsfreies Klinkermehl auf Portlandzementklinkerbasis effektiv in der Erstarrung zu verzögern. Es ist ferner bekannt, die Ligninsulfonate teilweise oder vollkommen durch andere Plastifizierer, wie z.B. Kondensationsprodukte der sulfonierten Phenole und Formaldehyde, Salze der Naphtalinsulfonsäuren und Alkalicarbonate durch Alkalihydroxide zu ersetzen.

Die Wirkungsmechanismen der Alkalicarbonate in Bindemittelmischungen aus sulfatträgerfreiem Portlandzementklinkermehl und aus Ligninsulfonaten und Alkalicarbonaten sind in "Cement and concrete Research" Vol. 3, Seiten 279 bis 293, Pergamon Press, Inc. 1973 beschrieben. Nach dem Kontakt des Zementes mit Wasser ist die Lösung mit Calciumhydroxid [CA(OH)₂] gesättigt. Die größte Menge des Calciumhydroxids entsteht durch die schnelle Reaktion des Tricalciumsilikats (C₃S). Weil der Zement stetsgewisse Anteile an Alkalien (Na₂O, K₂O) beinhaltet, ist der pH-Wert der Zementlösung immer höher als der einer gesättigten Calciumhydroxidlösung. Die Alkalien lösen sich und bilden OH⁻-Ionen. In den schnellerhärtenden Bindemitteln auf der Basis von sulfatfreien Klinkermehlen und Alkalicarbonaten kommen zzgl . OH⁻-Ionen aus der Umsetzung mit dem Ca(OH)₂ zu Carbonat. Das Carbonat in dem Leim aus dem sulfatfreien Klinkermehl hat einen ähnlichen bzw. gleichen Einfluß wie Gips in üblichen Pasten aus herkömmlichen Portlandzement also einem Zement, der durch das gemeinsame Vermahlen von Portlandzementklinker und einem Sulfatträger erzielt wurde. Statt eines Sulfoaluminates bilden sich auf der Oberfläche des Tricalciumaluminats (C₃A) andere schnellhydratisierende Zementkomponenten, die Calciumcarboaluminate. Die Calciumcarboaluminate bilden eine Schutzschicht um das C₃A und verhindern seine schnelle weitere Hydratation. Neben der Bildung von Calciumcarboaluminaten haben die Alkalicarbonate noch zwei weitere Einflüsse. Zum einen erhöhen Alkalien die Geschwindigkeit der Hydratation. Die Alkalianteile in den Alkalicarbonaten bilden Alkalihydroxide, welche die Löslichkeit von Calciumhydroxid herabsetzen, d.h., daß das Carbonat-Ion als Verzögerer und das Alkali-Ion als Beschleuniger wirkt. Der dritte Effekt von Alkalicarbonaten ist mit dem Ligninsulfonat verbunden. Ohne Alkalicarbonat fällt das Ligninsulfonat sehr schnell aus der Lösung aus, da in der flüssigen Phase des hydratisierten Zements genügend Ca²⁺-Ionen vorliegen, welche mit den Ligninsulfonaten reagieren können. Die, wie bereits beschrieben, von den Alkalicarbonaten produzierten OH⁻-Ionen, welche die Konzentration von Ca²⁺-Ionen in der Lösung reduzieren bewirken somit, daß Ligninsulfonat nicht ausfällt. Das nichtgefällte Ligninsulfonat kann somit an der Oberfläche der Zementkörner adsobiert werden.

In der EP 0 517 869 B1 werden zur Erhöhung der Festigkeit ein Carbonatdonator und mindestens eine eisenkomplexierende Verbindung eingesetzt. Als Carbonatdonator eignen sich wasserlösliche Salze der Kohlensäure. Ganz allgemein können als Carbonatdonatoren bzw. Carbonatgeneratoren Verbindungen eingesetzt werden, die in alkalischem wässrigen Milieu Carbonat-Ionen freisetzen oder mit reaktiven Calciumverbindungen zu Calciumcarbonat und/oder Calciumcarbonat enthaltenen Verbindungen reagieren (Carboaluminat, Carboaluminoferrit, Thaumasit, Carboaluminosilikat etc.).

AUS DE 2820067 ist ein Beschleunigungsmittel für Zement bekannt, das Triäthandamin, K₂CO₃ und Na₂CO₃ enthält.

Aufgabe der Erfindung ist es eine Bindemittelmischung zu schaffen, deren Frühfestigkeit insbesondere innerhalb eines vorgegebenen Zeitfensters bis 24 h und eines anwendungsgerechten Festigkeitsintervalls variabel einstellbar sind.

Die Aufgabe wird mit einer Bindemittelmischung mit den Merkmalen des Anspruch 1 und einem Verfahren mit den Merkmalen des Anspruch 13 gelöst. Vorteilhafte Weiterbildungen sind in den Unteransprüchen gekennzeichnet.

Die erfindungsgemäße Bindemittelmischung weist als Bindemittelbestandteil ein sulfatträgerfreies Portlandzementklinkermehl auf. Zur Erstarrungs- und Erhärtungsregelung werden Ligninsulfonate und Alkalicarbonate eingesetzt. Als Alkalicarbonate werden Natrium- und Kaliumcarbonat in einem Mischungsverhältnis im Bereich des Anspruchs 1 eingsetzt.

Es hat sich überraschenderweise herausgestellt, daß durch die Variation des Verhältnisses von Kaliumcarbonat zu Natriumcarbonat die Frühfestigkeit der Bindemittelpaste in einem weitem Bereich insbesondere an den jeweiligen Verwendungszweck angepaßt variiert werden kann. Die Festigkeitsentwicklung der angemachten Bindemittelmischung kann somit zielgerichtet durch eine entsprechende Mischung aus Natrium- und Kaliumcarbonat schon werkseitig eingestellt werden, wobei die Festigkeitsentwicklung insbesondere im Bereich von 2 bis 24 h durch das Verhältnis der Alkalicarbonate steuerbar ist. Hierbei wird, bei einer vorgegebenen Mischung bzw. bei einer vorgegebenen Bindemittelkomponente und bei einem vorgegebenen Bereich der Frühfestigkeit zur Steuerung des Frühfestigkeitsverlaufs und der Frühfestigkeit das Na₂O-Äquivalent - abgestimmt auf diese Parameter - konstant gehalten und lediglich das Verhältnis von K₂CO₃/(K₂CO₃ + Na₂CO₃) innerhalb des konstanten Na₂O-Äquivalents wie er im Anspruch 1 definiert ist, verändert, Zusätzlich ist die Verarbeitungszeit durch weitere Zusatzmittel wie Ligninsulfonat innerhalb begrenzter Zeitfenster ohne nachhaltige Festigkeitsverluste zu frühen Zeitpunkten einstellbar. Insofern wird eine weite Variabilität bezüglich des Beginns der Festigkeit und der Höhe der Festigkeit der Paste geschaffen. Eine weitere Einflußmöglichkeit bezüglich der Festigkeitsentwicklung und des Beginns der Festigkeitsentwicklung liegt in der Feinheit der verwendeten Bindemittelkomponente. Darüberhinaus können diese Parameter auch dadurch gesteuert werden, daß der Bindemittelbestandteil, in diesem Fall das Klinkermehl, aus unterschiedlichen Kornfraktionen jeweils individualisiert für den Anwendungsfall zusammengemischt wird.

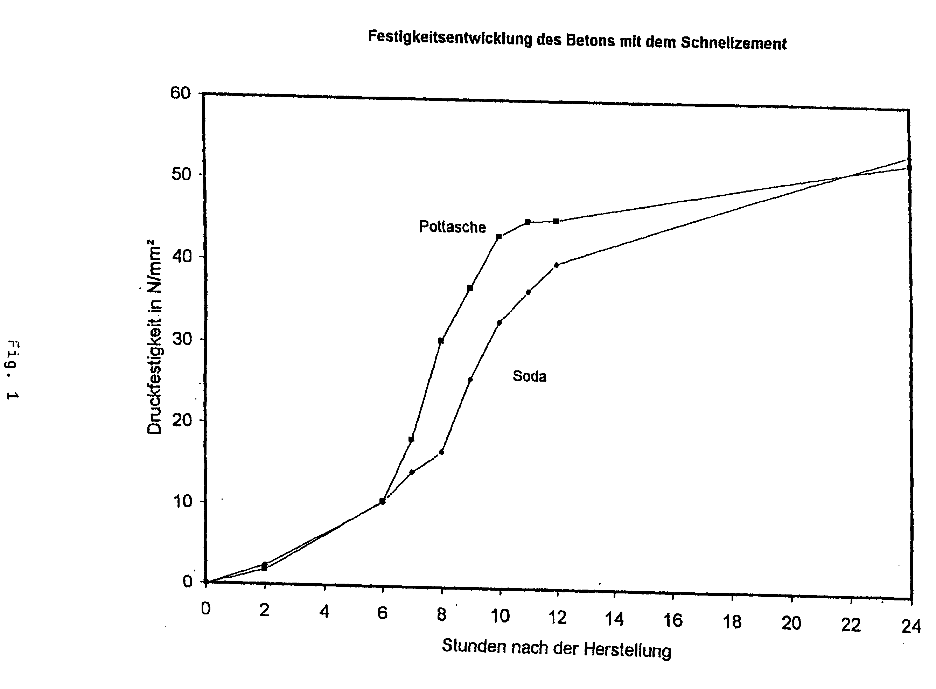

In der Fig. 1 ist beispielhaft der Bereich zu sehen, der von den beiden Alkalicarbonaten eingegrenzt wird und innerhalb dessen eine Festigkeitsvariation stattfinden kann. Die entsprechenden Kurven wurden dabei dadurch gefunden, daß ein Spezialzement aus 97,7 % Klinkermehl der Feinheit D96 < 12,5 µm und 0,3 % Ligninsulfonat im einen Fall mit 2 % Natriumcarbonat und im anderen Fall mit 3,04 % Kaliumcarbonat versetzt wurde, wobei 450 kg/m³ des Spezialzements mit 1.973 kg/m³ Zuschlag, bestehend aus 35 % der Korngröße 0-2, 25 % der Korngröße 5-8 und 40 % der Körnung 8/11 bei einem Wasserzementwert von 0,35 zusammengemischt wurden.

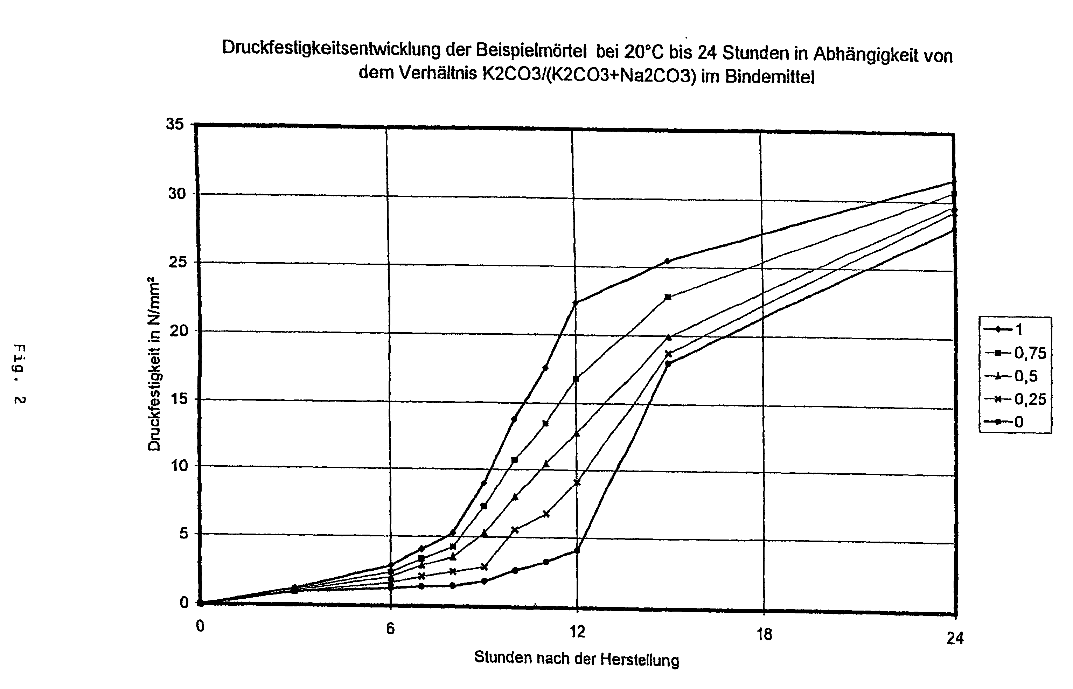

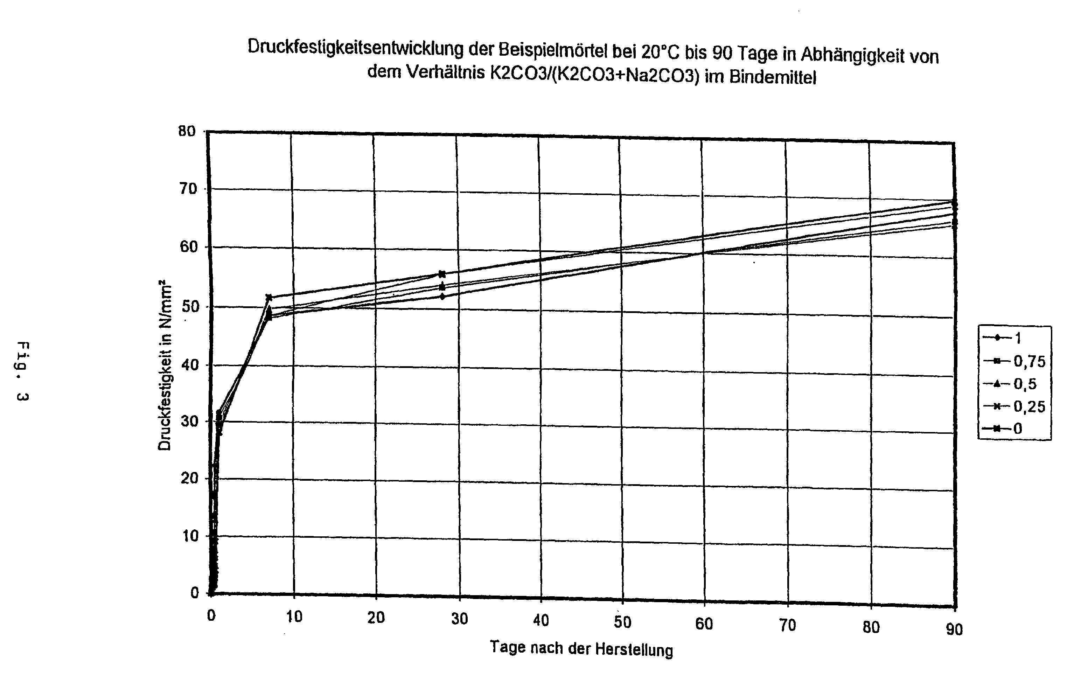

Die Fig. 2 zeigt die mögliche Variabilität infolge der Änderung des Verhältnisses K₂CO₃/(K₂CO₃ + Na₂CO₃). Die unterschiedlichen Kurven gehen dabei von einem Verhältnis von 1 bis 0 aus. Ausgebildet wurden die Mischungen aus je 450 g Schnellzement mit der entsprechend variierten Beschleunigerzusammensetzung 1.350 g Normsand und 157,5 g Wasser, wobei die schnellerhärtende hydraulische Mischung eine spezielle Korngrößen und Phasenzusammensetzung aufwies. Die Druckfestigkeitsentwicklung der Beispielmörtel ist bis 24 h in der Fig. 2 und bis 90 Tage in der Fig. 3 dargestellt. In diesem speziellen Fall war die Phasen - und Kornzusammensetzung des Zements auf eine Verarbeitbarkeit im Bereich von 60 Minuten eingestellt.

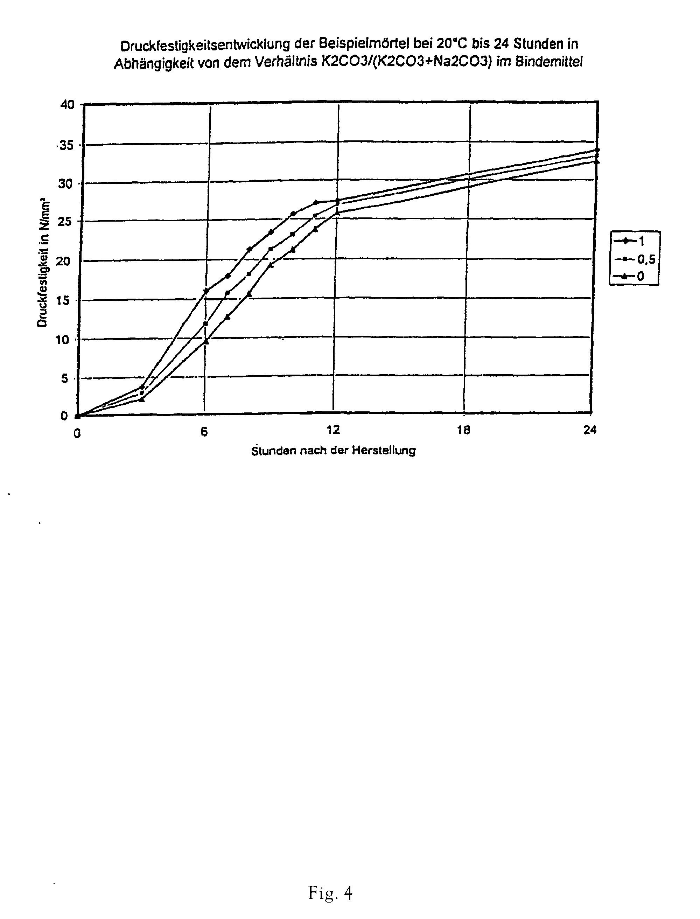

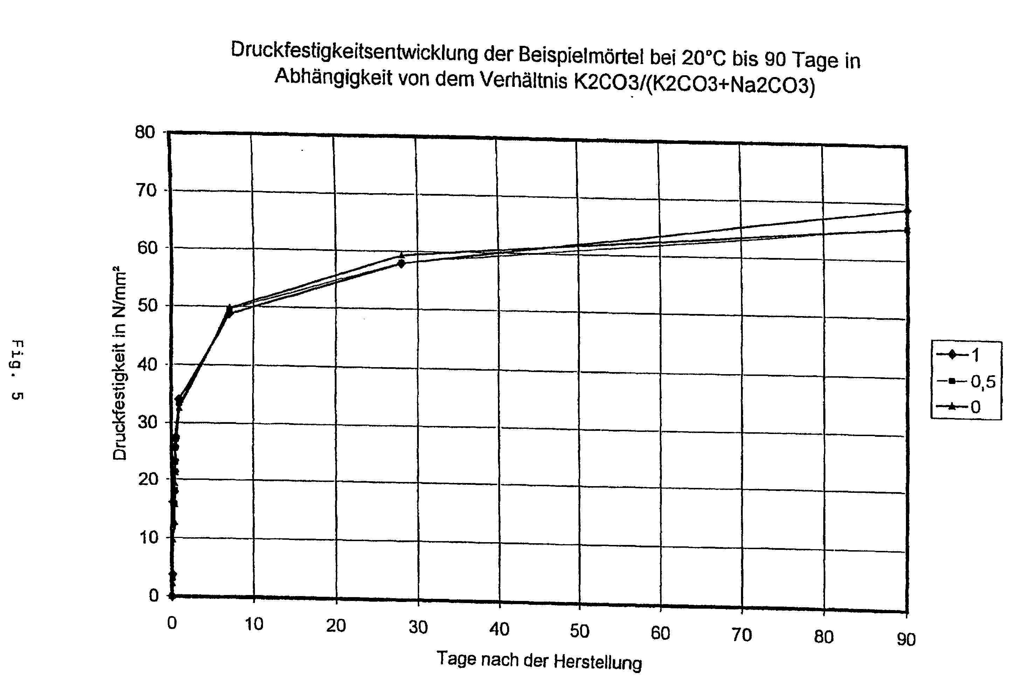

In einem weiteren Versuch wurde die schnellerhärtende hydraulische Mischung mit einer Krongrößenverteilung- bzw. fraktionenzusammensetzung und Phasenzusammensetzung gewählt, welche eine Verarbeitbarkeit von etwa 10 Minuten gewährleistet. Anschließend entwickelt diese Mischung insbesondere im Bereich von 4 bis 24 h unterschiedlich schnell hohe Festigkeiten, die vom Verhältnis der Alkalicarbonate abhängen. Für den Versuch wurde eine Mischung aus 450 g Schnellzement mit den obigen variierenden Zusammensetzungen der Alkalicarbonate sowie 1350 g Normsand mit 157,5 g Wasser gemischt. Die Druckfestigkeitsentwicklung der Beispielmörtel bei 20° bis 24 h ist in Fig. 4 dargestellt, wobei das Verhältnis K₂CO₃/(K₂CO₃ + Na₂CO₃) zwischen 0 und 1 variiert, wurde. Die Druckfestigkeitsentwicklung bis zu 90 Tagen nach der Herstellung ist in Fig. 5 dargestellt.

Bei der erfindungsgemäßen hydraulischen Bindemittelmischung ist von Vorteil, daß die Frühfestigkeit, insbesondere der Frühfestigkeitsverlauf sowie der Beginn der Frühfestigkeitsentwicklung in einem weiten Zeitrahmen bis 24 Stunden und in einem weiten Festigkeitsrahmen, abgestimmt auf den Anwendungsbereich und die Anforderungen des Kunden individualisiert einstellbar ist. Zudem kann die Festigkeitsentwicklung über die Korngrößenverteilung bzw. die Feinheit der eingesetzten Bindemittelkomponente und der Phasenzusammensetzung geregelt werden.

## Patentansprüche

1. Schnell erhärtende Bindemittelmischung aufweisend eine sulfatträgerfreie, insbesondere ohne Sulfatträger vermahlene hydraulische Bindemittelkomponente und Zusatzmittel,
**gekennzeichnet durch**
eine Erhärtungsbeschleunigermischung als Zusatzmittel aus Natriumcarbonat und Kaliumcarbonat zur Steuerung der Frühfestigkeit und der Frühfestigkeitsentwicklung insbesondere in einem Zeitfenster bis 24 Stunden, wobei bei vorgegebenem Na₂O-Äquivalent das Verhältnis von K₂CO₃/(K₂CO₃ + Na₂CO₃) auf den jeweiligen Anwendungsfall abgestimmt ist und zwischen > 0 und < 1 liegt.

2. Bindemittelmischung nach Anspruch 1,
**dadurch gekennzeichnet, dass**
zur Steuerung des Beginns der Frühfestigkeitsentwicklung eine den Erstarrungsbeginn verzögernde Komponente zugesetzt enthalten ist.

3. Bindemittelmischung nach Anspruch 1 und/oder 2,
**dadurch gekennzeichnet, dass**
0,1 bis 10 Masse-% Alkalicarbonat enthalten sind.

4. Bindemittelmischung nach einem oder mehreren der Ansprüche 2 bis 3,
**dadurch gekennzeichnet, dass**
0,05 bis 5 Masse-% der verzögernden Komponente enthalten sind.

5. Bindemittelmischung nach einem oder mehreren der Ansprüche 1 bis 4
**dadurch gekennzeichnet, dass**
die Bindemittelkomponente ein Portfandzementklinkermehl aufweist, insbesondere in Mengen von 25 bis 99,7 Masse-% bezogen auf die Bindemittelmischung.

6. Bindemittelmischung nach einem oder mehreren der Ansprüche 1 bis 5,
**dadurch gekennzeichnet, dass**
die Bindemittelkomponente einen Tonerdezement und/oder puzzolanische und/oder latenthydraulische Stoffe wie Hochofenschlackemehl oder Flugasche aufweist, insbesondere in Mengen von 0 bis 30 Masse-% bezogen auf die Bindemittelmischung.

7. Bindemittelmischung nach einem oder mehreren der vorhergehenden Ansprüche,
**dadurch gekennzeichnet, dass**
die Mischung Füllstoffe wie Gesteinsmehle und/oder hochdisperse Kieselsäure aufweist, insbesondere in Mengen von 0 bis 30 Masse-% bezogen auf die Bindemittelmischung.

8. Bindemittelmischung nach einem oder mehreren der vorhergehenden Ansprüche,
**dadurch gekennzeichnet, dass**
ein Verflüssiger enthalten ist.

9. Bindemittelmischung nach einem oder mehreren der vorhergehenden Ansprüche,
**dadurch gekennzeichnet, dass**
die die Erstarrung verzögernde Komponente eine verflüssigende Wirkung aufweist.

10. Bindemittetmischung nach einem oder mehreren der vorhergehenden Ansprüche,
**dadurch gekennzeichnet, dass**
die die Erstarrung verzögernde Komponente eine Sulfonsäuregruppen aufweisende Komponente ist.

11. Bindemittelmischung nach einem oder mehreren der vorhergehenden Ansprüche,
**dadurch gekennzeichnet, dass**
die Sulfonsäuregruppen aufweisende Komponente ein Ligninsulfonat ist.

12. Bindemittelmischung nach einem oder mehreren der vorhergehenden Ansprüche,
**dadurch gekennzeichnet, dass**
die Mischung an sich bekannte Zusatzstoffe und/oder Zusatzmittel enthält.

13. Verfahren zur Steuerung der Frühfestigkeit und der Festigkeitsentwicklung insbesondere innerhalb eines Zeitfensters bis 24 Stunden einer mit Wasser angemachten oder anzumachenden Bindemittelmischung, wobei die Bindemittelmischung eine sulfatträgerfreie, insbesondere ohne Sulfatträger vermahlene hydraulische Bindemittelkomponente aufweist,
**dadurch gekennzeichnet, dass**
eine Erhärtungsbeschleunigermischung aus Natriumcarbonat und Kaliumcarbonat zugesetzt wird, die ein vorgegebenes Na₂O-Äquivalent aufweist, wobei das Verhältnis von K₂CO₃/(K₂CO₃ + Na₂CO₃) auf den jeweiligen Anwendungsfall bezüglich der Frühfestigkeit und der Frühfestigkeitsentwicklung abgestimmt wird im Bereich zwischen > 0 und < 1.

14. Verfahren nach Anspruch 12,
**dadurch gekennzeichnet, dass**
zur Steuerung des Beginns der Frühfestigkeitsentwicklung ein Erstarrungsverzögerer, insbesondere Ligninsulfonat zugegeben wird.

15. Verfahren nach Anspruch 12 und/oder 13,
**dadurch gekennzeichnet, dass**
die Festigkeitsentwicklung und die Frühfestigkeit zusätzlich über die Kornfreiheit und die Kornverteilung der hydraulischen Bindemittelkomponente gesteuert wird, wobei zur Erzielung einer hohen Frühfestigkeit die Feinheit der hydraulischen Bindemittelkomponente erhöht wird bzw. der Anteil der feinen Kornfraktion auf Kosten der gröberen Kornfraktion in der Mischung erhöht wird.

## Claims

1. Rapidly hardening binder mixture containing a sulphate carrier-free, hydraulic binder component, in particular ground without sulphate carriers, and additives,
**characterized by** a hardening accelerator mixture as additive made from sodium carbonate and potassium carbonate for control of the early strength and the early strength development, in particular in a time window up to 24 hours, wherein with a predefined Na₂O equivalent the ratio of K₂CO₃ to (K₂CO₃ + Na₂CO₃) is adapted to the given application and lies between > 0 and < 1.

2. Binder mixture according to Claim 1, **characterized in that** to control the' start of the strength development, it contains an added component retarding the start of setting.

3. Binder mixture according to Claim 1 and/or Claim 2, **characterized in that** it contains 0.1 to 10 weight % of alkali metal carbonate.

4. Binder mixture according to one or several of Claims 2 to 3, **characterized in that** it contains 0.05 to 5 weight % of the retarding component.

5. Binder mixture according to one or several of Claims 1 to 4, **characterized in that** the binder component contains a Portland cement clinker meal, in particular in proportions of 25 to 99.7 weight % based on the binder mixture.

6. Binder mixture according to one or several of Claims 1 to 5, **characterized in that** the binder component contains an alumina cement and/or pozzolanic and/or latent hydraulic substance such as blast furnace slag flour or fly ash, in particular in proportions of 0 to 30 weight % based on the binder mixture.

7. Binder mixture according to one or several of the foregoing Claims, **characterized in that** the mixture contains fillers such as rock dust and/or high disperse silicic acid, in particular in proportions of 0 to 30 weight % based on the binder mixture.

8. Binder mixture according to one or several of the foregoing Claims, **characterized in that** it contains a fluidising agent.

9. Binder mixture according to one or several of the foregoing Claims, **characterized in that** the component retarding setting has a fluidising action.

10. Binder mixture according to one or several of the foregoing Claims, **characterized in that** the component retarding setting is a component having sulphonic acid groups.

11. Binder mixture according to one or several of the foregoing Claims, **characterized in that** the component having sulphonic acid groups is a ligninsulphonate.

12. Binder mixture according to one or several of the foregoing Claims, **characterized in that** the mixture contains additives and/or admixtures that are known per se.

13. Process for control of the early strength and the strength development, in particular within a time window up to 24 hours, of a binder mixture mixed or to be mixed with water, wherein the binder mixture contains a sulphate carrier-free, hydraulic binder component, in particular ground without sulphate carriers, **characterized in that** a hardening accelerator mixture of sodium carbonate and potassium carbonate is added, which has a predefined Na₂O equivalent, wherein the ratio of K₂CO₃ to (K₂CO₃ + Na₂CO₃) is adapted to the given application and lies in the range between > 0 and < 1.

14. Process according to Claim 12, **characterized in that** a setting retardant, in particular ligninsulphonate, is added to control the start of the early strength development.

15. Process according to Claim 12 and/or 13, **characterized in that** the strength development and the early strength are additionally controlled via the particle fineness and distribution of the hydraulic binder components, wherein in order to achieve high early strength the fineness of the hydraulic binder component is increased or the proportion of the fine granule fraction is increased at the expense of the coarser granule fraction in the mixture.

## Revendications

1. Composition de liant durcissant rapidement, comportant un composant de type liant hydraulique sans support sulfate, en particulier broyé sans support sulfate, et des additifs, **caractérisée par** un mélange accélérateur de durcissement en tant qu'additif, à base de carbonate de sodium et de carbonate de potassium pour le réglage de la résistance initiale et du développement de la résistance initiale en particulier dans un intervalle de temps allant jusqu'à 24 heures, à un équivalent préétabli de Na₂O le rapport K₂CO₃/-(K₂CO₃ + Na₂CO₃) étant adapté au cas d'utilisation respectif et compris entre >0 et <1.

2. Composition de liant selon la revendication 1, **caractérisée en ce qu'**elle contient, pour le réglage du début du développement de la résistance initiale, un composant ajouté, retardant le début de la prise.

3. Composition de liant selon la revendication 1 et/ou 2, **caractérisée en ce qu'**elle contient de 0,1 à 10 % en masse de carbonate alcalin.

4. Composition de liant selon la revendication 2 et/ou 3, **caractérisée en ce qu'**elle contient de 0,05 à 5 % en masse du composant retardateur.

5. Composition de liant selon une ou plusieurs des revendications 1 à 4, **caractérisée en ce que** le composant de type liant comporte une poudre de clinker de ciment Portland, en particulier en quantités de 25 à 99,7 % en masse, par rapport à la composition de liant.

6. Composition de liant selon une ou plusieurs des revendications 1 à 5, **caractérisée en ce que** le composant de type liant comporte un ciment alumineux et/ou des matières pouzzolaniques et/ou hydrauliques latentes, telles que de la poudre de laitier de haut-fourneau ou des cendres volantes, en particulier en quantités de 0 à 30 % en masse, par rapport à la composition de liant.

7. Composition de liant selon une ou plusieurs des revendications précédentes, **caractérisée en ce que** la composition comporte des charges telles que de la roche broyée et/ou de la silice hautement dispersée, en particulier en quantités de 0 à 30 % en masse, par rapport à la composition de liant.

8. Composition de liant selon une ou plusieurs des revendications précédentes, **caractérisée en ce qu'**un fluidifiant est contenu.

9. Composition de liant selon une ou plusieurs des revendications précédentes, **caractérisée en ce que** le composant retardant le durcissement a un effet fluidifiant.

10. Composition de liant selon une ou plusieurs des revendications précédentes, **caractérisée en ce que** le composant retardant le durcissement est un composant comportant des groupes sulfo.

11. Composition de liant selon une ou plusieurs des revendications précédentes, **caractérisée en ce que** le composant comportant des groupes sulfo est un ligninesulfonate.

12. Composition de liant selon une ou plusieurs des revendications précédentes, **caractérisée en ce que** la composition contient des additifs et/ou adjuvants connus en soi.

13. Procédé pour le réglage de la résistance initiale et du développement de la résistance initiale, en particulier dans un intervalle de temps allant jusqu'à 24 heures, d'une composition de liant gâchée ou à gâcher avec de l'eau, la composition de liant comportant un composant de type liant hydraulique sans support sulfate, en particulier broyé sans support sulfate, **caractérisé en ce qu'**on ajoute un mélange accélérateur de durcissement, à base de carbonate de sodium et de carbonate de potassium, qui comporte un équivalent préétabli de Na₂O, le rapport K₂CO₃/(K₂CO₃ + Na₂CO₃) étant adapté au cas d'utilisation respectif eu égard à la résistance initiale et au développement de la résistance initiale, dans la plage comprise entre >0 et <1.

14. Procédé selon la revendication 12, **caractérisé en ce que**, pour le réglage du début du développement de la résistance initiale, on ajoute un retardateur de durcissement, en particulier un ligninesulfonate.

15. Procédé selon la revendication 12 et/ou 13, **caractérisé en ce que** le développement de la résistance et la résistance initiale sont réglés en outre par la finesse de grain et la distribution granulométrique du composant de type liant hydraulique, pour l'obtention d'une haute résistance initiale la finesse du composant de type liant hydraulique étant augmentée ou la proportion de la fraction granulométrique fine étant augmentée aux dépens de la fraction granulométrique plus grosse dans la composition.
